# EUROPÄISCHE PATENTANMELDUNG

(11) **EP 0 986 120 A1**
(43) Veröffentlichungstag der Anmeldung: **15.03.2000**
(21) Anmeldenummer: 99114909.7
(22) Anmeldetag: 30.07.1999
(51) Int. Cl.: H01M 4/52, C01G 53/04

(54) **Aktives Nickelhydroxid-Material für alkalische Akkumulatoren und Verfahren zu seiner Herstellung**

(30) Priorität: 10.09.1998 DE 19841396
(71) Anmelder: VARTA Gerätebatterie GmbH, 30419 Hannover (DE)
(72) Erfinder: Bäuerlein, Peter, Dr., 65520 Bad Camberg (DE); Föller, Erika, 61352 Bad Homburg (DE)
(74) Vertreter: Kaiser, Dieter Ralf, Dipl.-Ing.

(57) **Zusammenfassung**

Die Erfindung betrifft ein aktives Nickelhydroxid-Material für positive Elektroden von alkalischen Akkumulatoren bei dem die kobaltfreie Oberfläche der Nickelhydroxid enthaltenden Teilchen mit einem oder mehreren der Metallhydroxide, ausgewählt aus der Gruppe Yttrium, Ytterbium, Indium, Kupfer oder Mangan, beschichtet ist.

## Beschreibung

Die Erfindung betrifft ein aktives pulverförmiges Nickelhydroxid-Material für positive Elektroden in alkalischen Akkumulatoren, bei dem die Oberfläche der einzelnen Teilchen mit einem Metallhydroxid beschichtet ist. Die Erfindung betrifft weiterhin ein Verfahren zur Herstellung dieses Materials.

Nickelhydroxidelektroden, die als aktives Material hauptsächlich Nickelhydroxid enthalten, werden eingesetzt als positive Elektroden in Nickel-Cadmium (NiCd)- und Nickel-Metallhydrid (NiMH)-Akkumulatoren. Einhergehend mit den steigenden Anforderungen an eine verbesserte Kapazität der Akkumulatoren, insbesondere in Hinblick auf den Einsatz solcher Akkumulatoren in transportablen elektronischen Geräten, besteht ein Bedarf nach einer verbesserten Energiedichte der verwendeten Akkumulatoren und insbesondere der darin eingesetzten Nickelhydroxidelektroden. Neben der Forderung nach einer höheren Kapazität bestehen auch höhere Anforderungen hinsichtlich der Tiefentladbarkeit bzw. Überladbarkeit der Zellen. Die beiden letztgenannten Anforderungen werden durch den HTSC-Test (High Temperature Short Circuit)-Test simuliert. Zur Erhöhung der Kapazität von Nickelhydroxidelektroden sind verschiedene Verfahren bekannt. So wird in dem Dokument EP-A 544011 die Kopräzipitation von Zink und/oder Kobalt mit dem Nickelhydroxid beschrieben. Dabei entsteht eine die Hydroxide des Zink und Kobalt enthaltende Nickelhydroxid-Feststofflösung.

Aus dem Dokument EP-A 650027 ist ein Nickelhydroxid-Material bekannt, das durch die gemeinsame Fällung von Nickelhydroxid mit Hydroxiden der Metalle, ausgewählt aus der Gruppe Zink, Cadmium, Magnesium, Calcium, Mangan, Kobalt, Kupfer und Aluminium, erhalten wird, wobei anschließend ein Teil dieser Metallionen aus dem Nickelhydroxid wieder extrahiert wird.

Weiterhin ist es aus dem Dokument EP-A 727835 bekannt, nickelhydroxidhaltige Materialien für positive Elektroden von alkalischen Akkumulatoren herzustellen, indem man die Nickelhydroxid enthaltenden Teilchen mit einem Metall-Mischhydroxid, bestehend aus Kobalt und wenigstens einem weiteren Metalloxid beschichtet. Als weitere Metallhydroxide werden die des Aluminiums, Magnesiums, Indiums und Zinks genannt.

Bei den bekannten Verfahren zur Oberflächenbeschichtung von Nickelhydroxidteilchen oder Nickelhydroxid-Metallhydroxid-Copräzipitaten wird zur besseren elektronischen Anbindung der Teilchen, d.h. zur Verbesserung der Leitfähigkeit der damit hergestellten Elektroden, wenigstens als eine Komponente Kobalthydroxid als Beschichtungsbildner eingesetzt.

Die Erfindung hat sich die Aufgabe gestellt, ein oberflächenbeschichtetes nickelhydroxidhaltiges aktives Material für positive Elektroden von alkalischen Akkumulatoren sowie ein Verfahren zur Herstellung eines solchen Materials anzugeben, das eine hohe Kapazität aufweist, obwohl auf einen Kobalthydroxidanteil in der Beschichtung verzichtet wird.

Erfindungsgemäß wird diese Aufgabe durch die in Anspruch 1 angegebenen Merkmale gelöst. Vorteilhafterweise beträgt der Anteil der Beschichtung 0.1 - 5 Gew.% der Masse des eingesetzten unbeschichteten Nickelhydroxids.

Die Erfindung wird in einem Verfahren zur Herstellung eines aktiven nickelhaltigen Materials realisiert, welches dadurch gekennzeichnet ist, daß Nickelhydroxid-Teilchen in einer Lauge dispergiert werden und eine wäßrige Salzlösung eines Metalls, ausgewählt aus der Gruppe Yttrium, Ytterbium, Indium, Kupfer oder Mangan, bei Temperaturen von 5 - 100°C zugetropft wird, wobei der pH-Wert zwischen 10 und 14 gehalten wird.

Eine vorteilhafte Ausgestaltung des Verfahrens besteht darin, daß die Zugabe der wäßrigen Salzlösung bei Temperaturen von 20 - 80°C im pH-Bereich zwischen 11 und 12 erfolgt.

Die erfindungsgemäß erhaltenen Materialien weisen trotz Verzichts auf einen Kobaltanteil in der Beschichtung der Nickelhydroxidteilchen eine höhere Kapazität als die bekannten Materialien auf und unterliegen einem geringeren Kapazitätsverlust beim HTSC-Test. Neben der Erhöhung der Masseausnutzung durch die Beschichtung des Nickelhydroxids allein mit Yttriumhydroxid ist es vorteilhaft, daß während des Beschichtungsprozesses nicht auf einen Sauerstoffausschluß geachtet werden muß.

### Beispiel 1

Jeweils 100 g sphärisches Nickelhydroxid werden in 400 ml wäßriger NaOH-Lösung in den in Tabelle 1 angegebenen Konzentrationen suspendiert. Anschließend werden innerhalb von 1-2 h die gleichfalls in Tabelle 1 angegebenen Konzentrationen der Lösungen von Yttrium(III)chlorid-Hexahydrat (YCl₃*6H₂O) in 400 ml Wasser bei Raumtemperatur zugetropft. Nach weiteren 0.5 h Rühren bei Raumtemperatur, läßt man über Nacht absitzen. Die Lösung wird vom Feststoff abdekantiert und dieser abgesaugt. Anschließend wird der Rückstand mit Wasser neutralgewaschen. Das Produkt wird an der Luft getrocknet. Die Charakterisierung des erhaltenen Produktes erfolgt mittels Pulver-Röntgen-Diffraktometrie (XRD), Rasterelektronenmikroskopie (REM) und chemischer Analyse.

**Tabelle 1**

| Beschichtung | NaOH [g] (mmol) | YCl₃*6H₂O [g] (mmol) |
|---|---|---|
| 0.3% | 5.14 (129) | 0.76 (2.14) |
| 1% | 17.3 (432) | 2.52 (7.14) |
| 3% | 51.4 (1285) | 7.56 (21.4) |

Das, wie oben beschrieben, hergestellte Material wird sodann in Knopfzellen auf seine elektrochemische Aktivität hin untersucht. Zunächst stellt man eine Mischung aus dem beschichteten Material, CoO und Ni-Pulver her. Die Mischung besteht aus folgenden Anteilen 60% beschichtetes Material + 10% CoO + 30% Ni-Pulver. Der Vergleich erfolgt mit einer Mischung von 60% unbeschichtetem Ni(OH)₂ + 10% CoO + 30% Ni-Pulver. Aus den angegebenen Mischungen werden Tabletten gepreßt, welche als Kathode in Knopfzellen Verwendung finden. In der Anode wird eine kommerzielle Wasserstoff-Speicherlegierung des AB₅-Typs verwendet. Als Elektrolyt dient 6.5 N KOH + 0.5 N LiOH. Die Elektroden lagert man zunächst 2 h im Elektrolyten, bevor man sie mit Separator und frischem Elektrolyt in die Zellenbecher einsetzt und diese verbördelt. Die Knopfzellen werden 3 Tage bei 45°C gelagert, anschließend werden die Zellen 15 h mit C/9 geladen und danach mit 2/9 C entladen, wobei C die zur einstündigen Ladung bzw. Entladung notwendige Stromstärke ist. Danach führt man 9 Lade/Entladezyklen aus, wobei man 7h mit 2/9C lädt und mit 2/9 C bis zu einer Abschaltspannung von 1 V entlädt. Im Anschluß an dieses Zyklenregime folgt der HTSC-Test. Die entladenen Zellen werden über einen 2Ω-Widerstand kurzgeschlossen und in diesem Zustand 3 Tage bei 60°C aufbewahrt. Anschließend folgen 5 weitere Zyklen mit einem Lade- bzw. Entladestrom von 2/9 C, wie vorher beschrieben. Aus der Zellenkapazität vor und nach HTSC läßt sich der HTSC-Verlust ermitteln.

Aus der gemessenen Zellkapazität (im 9. Zyklus) errechnet sich die Masseausnutzung des Materials, man erhält folgende Ergebnisse:

**Tabelle 2**

| Beschichtung | C [mAh/g] | C [% Standard] |
|---|---|---|
| Keine | 261 | 100 |
| 0.3% Y(OH)₃ | 273 | 105 |
| 1% Y(OH)₃ | 271 | 104 |

### Beispiel 2

Analog Beispiel 1 werden Proben hergestellt, die an Stelle eines hochkapazitiven sphärischen Nickelhydroxids ein niederkapazitives nadelförmiges Nickelhydroxid verwenden. Tabelle 3 zeigt die Ergebnisse der in Knopfzellen ermittelten Masseausnutzung der beschichtetem Nickelhydroxid-Proben:

**Tabelle 3**

| Beschichtung | C [mAh/g] | C [% Standard] |
|---|---|---|
| Keine | 198 | 100 |
| 0.3% Y(OH)₃ | 212 | 107 |
| 1% Y(OH)₃ | 208 | 105 |

### Beispiel 3 - 6 und Vergleichsbeispiele mit Co-Beschichtung

Außer Yttrium wurden noch weitere Metalle in Form ihrer Hydroxide auf das sphärische Nickelhydroxid in Mengen zwischen 0.3 Gew.% und 1 Gew.% bezüglich des eingesetzten Nickelhydroxids aufgefällt.

Die Ergebnisse sind in Tabelle 4 für eine Beschichtung mit 0.3% bzw. 1% Fremdhydroxid zusammengefaßt.

Masseausnutzung in Knopfzellen mit beschichtetem Nickelhydroxid

**Tabelle 4**

| Beschichtung | C [% Standard] |
|---|---|
| Keine | 100 |
| 0.3% Co(OH)₂ | 99 |
| 1.0% Co(OH)₂ | 98 |
| 0.3% In(OH)₃ | 102 |
| 0.3% Yb(OH)₃ | 102 |
| 0.3% Cu(OH)₂ | 102 |
| 1.0% Mn(OH)₂ | 102 |

Bei der Herstellung der erfindungsgemäß beschichteten Nickelhydroxide können auch Sulfate oder Nitrate des Yttriums statt der in den Beispielen beschriebenen Chloride verwendet werden.

## Patentansprüche

1. Aktives Nickelhydroxid-Material für positive Elektroden von alkalischen Akkumulatoren, bei dem die Oberfläche der Teilchen mit einem Metallhydroxid beschichtet ist, dadurch gekennzeichnet, daß die kobaltfreie Beschichtung aus einem oder mehreren der Metallhydroxide, ausgewählt aus der Gruppe Yttrium, Ytterbium, Indium, Kupfer oder Mangan, besteht.

2. Aktives Nickelhydroxid-Material nach Anspruch 1, dadurch gekennzeichnet, daß der Anteil der Beschichtung 0.1 - 5 Gew.% der Masse des eingesetzten unbeschichteten Nickelhydroxids beträgt.

3. Verfahren zur Herstellung eines aktiven Nickelhydroxid-Materials gemäß Anspruch 1, dadurch gekennzeichnet, daß Nickelhydroxid-Teilchen in einer Lauge dispergiert werden und eine wäßrige Salzlösung eines oder mehrerer Metalle, ausgewählt aus der Gruppe Yttrium, Ytterbium, Indium, Kupfer oder Mangan, bei Temperaturen von 5 - 100°C zugetropft wird, wobei der pH-Wert zwischen 10 und 14 gehalten wird.

4. Verfahren nach Anspruch 3, dadurch gekennzeichnet, daß die Zugabe der wäßrigen Salzlösung bei Temperaturen von 20 - 80°C im pH-Bereich zwischen 11 und 12 erfolgt.
